# FASCICULE DE BREVET EUROPEEN

(11) **EP 4 061 547 B1**
(45) Date de publication et mention de la délivrance du brevet: **26.06.2024**
(21) Numéro de dépôt: 20821051.8
(22) Date de dépôt: 20.11.2020
(51) Int. Cl.: B07C 5/36

(54) **ENSEMBLE ET PROCÉDÉ DE TRI D'OBJETS A RECYCLER**
VORRICHTUNG UND VERFAHREN ZUM SORTIEREN VON RECYCLINGOBJEKTEN
DEVICE AND METHOD FOR SORTING RECYCLABLE OBJECTS

(30) Priorité: 21.11.2019 FR 1912997
(43) Date de publication de la demande: 28.09.2022
(73) Titulaire: Suez International, 92040 Paris la Défense Cedex (FR)
(72) Inventeur: RIJCKEVORSEL, Franz, 92040 PARIS LA DEFENSE (FR)
(74) Mandataire: Fédit-Loriot
(86) Numéro de dépôt international: PCT/FR2020/052145
(87) Numéro de publication internationale: WO 2021/099751

(56) Documents cités:
- WO-A1-2017/106778
- CN-A- 110 369 333
- US-A1- 2018 243 800

## Description

### Domaine de l'invention

L'invention concerne un ensemble de tri d'objets à recycler, tel que des déchets ou des matières solides à recycler.

### Arrière-Plan Technologique

L'invention concerne plus particulièrement un ensemble de traitement d'objets à recycler, tel que des déchets, pour la production de matières premières secondaires, qui sont des matériaux issus du recyclage d'objets et pouvant être utilisés en substitution totale ou partielle de matière première vierge. Un tel ensemble de traitement est le premier maillon d'une *chaîne de recyclage,* et inclut une chaîne de tri.

Parmi les matières premières secondaires on connaît notamment le carton, le papier, les métaux ferreux et non ferreux, le verre, le bois et certaines sortes de plastiques.

Dans les chaînes de tri d'objets pour la production de matières premières secondaires, il est nécessaire de distinguer dans le flux d'objets fourni, ceux relevant de la catégorie des matériaux attendus et ceux relevant d'une autre catégorie de matériaux, eux-mêmes recyclables ou non, afin d'extraire ces objets et/ou matières polluants le flux de la chaîne de tri, et par conséquent de la chaîne recyclage.

On distingue généralement deux logiques de tri :
- Le tri négatif, qui vise à extraire du flux d'objets à trier des objets considérés comme indésirables, soit parce qu'ils ne sont pas recyclables, soit parce qu'ils ne sont pas faits d'un matériau attendu, et
- Le tri positif, qui à l'inverse consiste à extraire du flux à trier les objets que l'on souhaite recycler, notamment parce qu'ils sont faits d'un matériau à recycler (canettes en aluminium ou bouteilles en PET transparent par exemple).

Une chaîne de tri peut comprendre successivement l'un et l'autre type de tri, voire les combiner. Ainsi, pour illustrer la combinaison de tri positif et de tri négatif, on connaît un dispositif comprenant une bande convoyage des objets à trier ; un organe de tri négatif qui permet de retirer du flux des objets indésirables, par exemple faits d'un matériau indésirable, et un dispositif de soufflage, pour séparer par tri positif deux types de matériaux recyclables différents sur des sous-bandes distinctes.

Il en est notamment ainsi du tri des objets plastiques en polyethylene terephthalate (PET) : le flux d'objets à trier est composé majoritairement de paillettes de PET transparent, et comprend également des objets de PET blanc et des objets de PET foncé.

Le PET transparent constitue alors le flux principal, les objets en PET blanc sont soufflés vers une première sous-bande, et le PET foncé vers une deuxième sous-bande. L'éjection du PET « coloré » constitue un tri négatif vis-à-vis de la bande principale et du PET transparent, mais pour le PET blanc et le PET sombre, qui sont chacun des matières premières secondaires recyclables, il s'agit d'un tri positif.

À noter, que certaines unités de tri fonctionnant avec des spectromètres proche infra-rouge (NIR) permettent le tri en 3 fractions, par exemple, une éjection tri positif d'un type de recyclable, une éjection tri négatif d'impureté ou de flux à trier plus en aval et un flux non éjecté de recyclable.

Les chaînes de tri comprennent habituellement des dispositifs de tri automatisés, aussi connus sous le nom d'unités de tri automatisé, destinés à contrôler la qualité du flux d'objets entrant et à extraire de ce flux des objets ciblés : objets indésirables en cas de tri négatif, ou objets recherchés en cas de tri positif.

Ces unités de tri automatisé comprennent généralement un organe de caractérisation et/ou d'identification - se présentant typiquement sous la forme d'une arche - apte à caractériser la qualité du flux d'objets entrant et un organe de tri permettant de séparer les différents objets du flux d'objets en fonction de leur caractérisation.

De nombreuses technologies de caractérisation et d'identification, peuvent être combinées entre elles pour améliorer les performances de caractérisation et d'identification des objets à trier.

On connaît notamment des techniques de tri électromagnétiques ou optiques, en particulier une technologie de spectrométrie proche infra-rouge, connue sous le nom de *Near Infrared,* et plus généralement sous son abréviation NI R.

On connaît aussi la technologie de thermographie infra-rouge moyen, plus connue sous son abréviation anglophone MIR ; la Spectroscopie Terahertz plus connue sous son abréviation anglophone de TER ou encore la Spectrométrie d'émission optique, généralement appelée selon son abréviation SEO.

Les robots de tri automatisé connus de l'art antérieur, fréquemment abrégés sous le seul nom de robots, comprennent généralement une arche de caractérisation, ou tout autre moyen de caractérisation, et un organe de tri. Certains robots sont même adaptés pour effectuer une reconnaissance d'image (notamment de forme, de couleur, de contraste, d'étiquettes, etc.) permettant de caractériser chaque objet.

On connaît par exemple des techniques de reconnaissance d'images et de reconnaissances d'objets, mettant en oeuvre des procédés d'apprentissage automatique ou de reconnaissance d'images à la lumière visible ; des techniques de rayons X par transmission, abrégé en XRT, ou de rayons X par fluorescence, abrégé en XRF, par exemple utiles pour la reconnaissance de métaux.

Toutes ces techniques, données à titre d'exemple et de manière non exhaustive, sont généralement intégrées dans des unités de tri autonomes, installées sur les chaînes de recyclage.

On connait notamment des unités de tris automatisés tels que décrits dans les documents US 2018/243800 A1, CN 110 369 333 A et WO 2017/106778 A1.

Toutefois, les unités de tri autonomes sont généralement indépendantes du reste de la chaîne de tri et/ou de recyclage. Aussi, lorsque cette unité est alimentée par un flux présentant des caractéristiques en dehors d'une plage de fonctionnement habituelle ou normale de l'installation (trop de produits sur la bande, trop de produit à éjecter, etc.), cela a pour effet de réduire la qualité des matières premières secondaires obtenues.

Il peut s'agir par exemple d'un cas où le flux entrant est fortement pollué de matériaux indésirables, par rapport au niveau de pureté désiré, ou bien d'un cas de défaillance de la chaîne de tri en amont ou de défaillance de l'unité de tri, ou bien d'un cas où celle-ci est en maintenance.

En pareils cas, le flux d'objets, pollué de matériaux indésirables, aussi appelé flux de mauvaise qualité, peut franchir l'étape de tri, être convoyé vers les étapes suivantes de recyclage, et réduire les performances de tri automatisé, nécessitant un retraitement du flux aval, par exemple par un tri manuel renforcé.

En particulier, lorsque le tri des objets est réalisé par soufflage des objets de sorte à les transférer de la bande principale vers des trémies de tri redirigeant les objets vers d'autres zones de la chaîne de tri, une trop grande quantité d'objets arrivant simultanément dans la zone de soufflage peut générer une saturation d'objets créant une pollution en aval du tri, l'organe de soufflage n'étant plus apte à trier correctement tous les objets présents sur la bande. Cela est particulièrement le cas pour les équipements de tri de type robot, pour lesquels la contrainte principale est le nombre d'objets triés par minutes.

À titre d'exemple, on sait que pour une unité de tri optique permettant de réduire le taux d'impureté de 20% à 2% d'un flux de bouteilles en matériau PET transparent, tout arrêt de fonctionnement de l'unité pendant une minute sur une heure de traitement mesuré, induira une baisse de la qualité moyenne du flux recyclé de 0.3%, ce qui correspond à 15% du total des impuretés admises dans le flux sortant sur l'heure de fonctionnement.

Il en est de même lorsque la densité surfacique d'objets à trier, autrement dit le nombre d'objets par mètre carré de bande de convoyage, est trop importante :
- soit l'identification est rendue trop difficile, ce qui entraîne une perte de performance globale du tri,
- soit, en cas de tri positif, notamment réalisé par soufflage, les performances de tri sont inférieures à ce qui est attendu, et on génère également une pollution en aval du tri, comme décrit ci-dessus en cas de tri négatif.

Aussi, il existe le besoin d'une solution pour améliorer la qualité du tri des unités de tri autonomes sur une chaîne de recyclage, en particulier par une meilleure ségrégation des matières ou objets à recycler.

### Exposé de l'invention

À cet effet, on propose en premier lieu un ensemble de tri d'objets, comportant :
- un circuit de tri comprenant au moins une bande support entraînée en mouvement convoyant un flux d'objets à recycler comprenant une pluralité d'objets de différents types, et une pluralité de trémies, chaque trémie étant associée à au moins un type d'objet du flux d'objets à recycler ;
- un organe d'identification et/ou de caractérisation adapté pour identifier et/ou caractériser dans ledit flux d'objets des objets ciblés en fonction de leur type, et apte à déterminer au moins une valeur de caractérisation du flux d'objets ;
- un organe de tri adapté pour diriger lesdits objets ciblés dans ladite trémie associée au type de l'objet ciblé ;
- un dispositif de dérivation du flux d'objets, apte à dériver au moins une portion du flux d'objets dans une trémie de dérivation ; et
- un organe de commande adapté pour recevoir dudit organe d'identification et de caractérisation au moins une donnée d'information sur le fonctionnement dudit organe d'identification et/ou de caractérisation et/ou au moins une valeur de caractérisation du flux d'objets ;
ledit organe de commande étant en outre adapté pour commander audit dispositif de dérivation du flux la dérivation d'au moins une portion du flux d'objets dans ladite trémie de dérivation en fonction de ladite au moins une donnée d'information et/ou de ladite au moins une donnée de caractérisation du flux d'objets reçue.

Au sens de l'invention, un « objet à recycler » est un objet fait au moins en partie d'un matériau pouvant servir de base à l'obtention d'une matière première secondaire, dite recyclée. Un objet à recycler est fréquemment un produit ou un matériau usagé, tel qu'un déchet industriel ou ménager, fait, de manière non limitative, de métal, verre, plastique, papier, carton ou encore de matière textile. Les objets en question peuvent être directement issus de la collecte sélective des ordures ménagères, c'est-à-dire que les objets, en particulier les déchets, n'ont subi aucun prétraitement avant le tri. Selon certains modes de réalisation, les objets ont pu subir un premier tri préliminaire. Il peut également s'agir d'objets ayant subi un prétraitement, notamment de type lavage et/ou broyage. Les objets à trier sont dans ce cas des fragments, et notamment des paillettes. Cela peut notamment être le cas des plastiques, tel que le PET, en particulier provenant de bouteilles ou contenants en plastiques ; du papier et/ou du carton ; ou bien de matériaux minéraux tels que les mâchefers, qui se présentent alors typiquement sous forme de particules minérales, en particulier des particules métalliques non ferreuses. Selon un mode de réalisation particulier, les objets à recycler n'ont pas subi de broyage.

Par « objet ciblé », on entend au sens de la présente invention soit un objet indésirable, soit au contraire un objet souhaité ou recherché.

Un objet ciblé peut être considéré comme « indésirable » par exemple parce qu'il n'est pas recyclable, ou parce qu'il n'est pas fait d'un matériau attendu (logique de tri négatif).

Inversement, un objet ciblé peut être considéré comme « souhaité » ou « recherché » lorsqu'il s'agit d'un matériau que l'on souhaite recycler (ou matériau attendu, logique de tri positif).

Par « organe d'identification et/ou de caractérisation », on entend au sens de la présente invention tout type de dispositif connu de l'homme du métier pour identifier les objets d'un flux d'objets à traiter et pour caractériser les objets de ce flux, tel que des arches de caractérisation, selon toute technique connue de l'homme du métier.

La notion de caractérisation est définie pour l'identification de la matière des objets : le traitement d'image dans le visible permet plutôt la reconnaissance ou l'identification d'un objet individuel, qui une fois connu, permet de déterminer en quelle matière il est constitué. À titre d'exemple il est connu qu'une bouteille de soda est fréquemment en PET transparent, ce qui permet une caractérisation de l'objet et de son matériau à partir de son identification visuelle.

Le dispositif de dérivation se situe en aval de l'ensemble comprenant ou constitué du dispositif de convoyage, de l'organe d'identification et/ou de caractérisation, et de l'organe de tri.

Ainsi, on peut dériver une portion de flux d'objets triés en fonction de données de caractérisation du flux et/ou de données de fonctionnement des moyens d'identification et de caractérisation, de sorte que cette portion ne soit pas récupérée en tant que portion de flux triée. Ainsi, on améliore la qualité du tri en diminuant le risque de retrouver des objets indésirables en aval du tri.

Avantageusement et de manière non limitative, ledit organe de commande est adapté pour :
- recevoir au moins une donnée d'alerte indiquant un arrêt (notamment en cas de maintenance) et/ou une défaillance dudit organe d'identification et de caractérisation ;
- lors de la réception de ladite donnée d'alerte, commander la dérivation de ladite au moins une portion du flux d'objets ;

Ledit organe de commande étant en outre adapté pour recevoir une donnée de fin d'alerte apte à commander l'arrêt de la dérivation dudit flux d'objets.

Au sens de la présente invention, on entend par « donnée d'alerte » tout type de signaux émis par l'organe d'identification et/ou de caractérisation pour indiquer un potentiel problème de réalisation du tri compte tenu de la structure de l'ensemble de tri.

En effet, un ensemble de tri est adapté pour assurer une performance globale, correspondant au taux de tri correctement effectué sur un flux d'objets à trier. Lorsque l'organe d'identification et/ou de caractérisation détermine que le flux entrant ne pourra être trié selon la performance recherchée, il émet alors un signal d'alerte, ou une donnée d'alerte, permettant de commander la dérivation du flux.

La performance recherchée est associée au critère d'agressivité du tri, qui définit le niveau d'incertitude acceptée quant à la caractérisation des objets détectés. Le tri d'objets se basant généralement sur des probabilités de reconnaissance, par exemple lors d'un tri optique, ou de comportement dynamique, par exemple dans le cas de tri mécanique, le réglage de seuils de probabilité permet de définir l'agressivité du tri.

Ainsi, plus un tri est agressif, plus le système de tri exigera une probabilité élevée de reconnaissance ou de caractérisation des objets, et par conséquent le flux trié sera d'une meilleure « pureté » car le système rejettera systématiquement les objets pour lesquels persiste une incertitude, même relativement faible. A contrario un tri faiblement agressif produira un flux moins pur, mais qui rejettera moins d'objets pour lesquels persiste une incertitude de reconnaissance ou de caractérisation.

L'agressivité du tri est un critère à équilibrer avec les impératifs de rendement du tri, un tri trop agressif pouvant générer un nombre relativement important de rejets inutiles.

L'agressivité du tri s'exprime ainsi en pourcentage de certitude ou d'incertitude, ou selon toute autre unité adaptée pour estimer une probabilité de reconnaissance ou de caractérisation des objets. Toutefois, selon les techniques de tri employées, la méthode de dimensionnement de l'agressivité de tri pourra varier et son unité pourra être librement choisie par l'homme du métier.

La donnée d'alerte peut en outre être émise lorsque l'organe d'identification et/ou de caractérisation connaît une défaillance propre, telle qu'une panne.

Avantageusement et de manière non limitative, ledit organe d'identification et de caractérisation est adapté pour déterminer un taux de couverture d'au moins une portion de la bande support par le flux d'objets ; ledit organe de commande étant adapté pour :
- recevoir ledit taux de couverture ;
- comparer ledit taux de couverture avec une valeur de seuil prédéfinie de couverture maximale ; et
- si ledit taux de couverture est supérieure à ladite valeur de seuil de couverture maximale, commander la dérivation dudit flux d'objets pour ladite portion de la bande support mesurée.

En effet, lorsqu'on détecte une trop grande densité surfacique d'objets sur la bande, le risque d'entraîner des objets indésirables dans le tri est relativement important, en particulier lorsque le tri est réalisé par des moyens de soufflage à air comprimé. Ceci permet d'améliorer encore la qualité du tri effectué par l'ensemble de tri.

Avantageusement et de manière non limitative, ledit organe d'identification et de caractérisation est adapté pour déterminer un taux d'objets indésirables sur au moins une portion de la bande support ; ledit organe de commande étant adapté pour :
- recevoir ledit taux d'objets ciblés ;
- comparer ledit taux d'objets ciblés avec une valeur prédéfinie de seuil maximal d'objets ciblés ; et
- si le taux d'objets ciblés est supérieure à ladite valeur prédéfinie de seuil maximal d'objets ciblés, commander la dérivation dudit flux d'objets pour ladite portion de la bande support mesurée.

Ainsi, lorsque le taux d'objets indésirables est trop élevé il existe le risque que l'organe de tri ne soit pas apte à trier correctement tous les objets ciblés de la portion de flux sur la portion de bande support analysée. Ceci permet aussi d'améliorer la qualité du tri effectuée par l'ensemble de tri.

Le taux d'objets indésirables peut être exprimé selon différentes unités que l'homme du métier pourra librement sélectionner et adapter à son besoin. On peut notamment exprimer un taux d'objets indésirables en pourcentage pondéral, en pourcentage surfacique ou encore en nombre d'objets.

Avantageusement et de manière non limitative, ledit organe d'identification et de caractérisation comprend une arche de caractérisation et/ou d'identification indépendante de l'organe de tri. Ceci permet d'obtenir des moyens de caractérisation relativement fiables et robustes.

En particulier, ledit organe d'identification et de caractérisation peut comprendre une arche de caractérisation par spectrométrie proche infra-rouge (11) qui permet d'obtenir des moyens de caractérisation relativement fiables et robustes.

Selon une alternative, ledit organe de tri et ledit organe d'identification et/ou de caractérisation sont intégrés dans un robot trieur. Ceci permet d'obtenir un ensemble de tri relativement performant.

Avantageusement et de manière non limitative, ledit dispositif de dérivation comprend une paroi mobile en rotation, adaptée pour passer d'une première position d'attente dans laquelle les objets convoyés par la bande de convoyage longent ladite paroi, à une position de dérivation dans laquelle la paroi forme barrage de sorte à dériver ladite au moins une portion du flux d'objets dans ladite trémie de dérivation. Cette plaque mobile permet ainsi d'obtenir une dérivation relativement fiable et peu coûteuse à mettre en oeuvre.

Avantageusement et de manière non limitative, le circuit de tri comprend une première bande support et une deuxième bande support installée de sorte à pouvoir recevoir au moins une partie des objets convoyés par la première bande support, et ledit dispositif de dérivation comprend un organe de soufflage installé au voisinage de ladite deuxième bande support et adapté pour générer un souffle apte à dériver au moins une partie du flux d'objets de la deuxième bande support vers la trémie de dérivation.

L'invention concerne aussi un procédé de dérivation d'un flux d'objets dans un ensemble de recyclage tel que décrit précédemment, comprenant :
- une étape d'acquisition d'au moins une donnée d'information sur le fonctionnement dudit organe d'identification et de caractérisation et/ou au moins une donnée de caractérisation du flux d'objets convoyé;
- une étape de commande du dispositif de dérivation du flux en fonction de ladite au moins une donnée d'information et/ou de ladite au moins une donnée de caractérisation du flux d'objets convoyé reçue.

L'invention concerne aussi un procédé de tri d'un flux de déchets dans un ensemble de recyclage tel que décrit précédemment, caractérisé en ce qu'il comprend en continu :
- une étape d'admission d'un flux de déchets sur le dispositif de convoyage ;
- une étape de tri par l'organe de tri des déchets du flux de déchets ; et
- la mise en oeuvre du procédé de dérivation précédent.

En particulier ledit procédé de tri peut comprendre, lorsqu'au moins une portion du flux de déchets est dérivée :
- une étape de recirculation de ladite au moins une portion du flux de déchets, et avantageusement une étape de prétraitement du flux d'objets recirculés, de sorte à réintroduire ladite au moins une portion du flux de déchets dans le flux de déchets admis à l'étape d'admission, et/ou
- lorsqu'un objet proscrit est détecté dans ladite au moins une portion de flux de déchets dérivée, une étape de mise en quarantaine de ladite au moins une portion de flux de déchets dérivée.

### Figures

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- [Fig. 1] est une représentation schématique d'un ensemble de recyclage d'objets selon un premier mode de réalisation ;
- [Fig. 2] est une représentation schématique d'un ensemble de recyclage d'objets selon un deuxième mode de réalisation ;
- [Fig. 3] est une représentation schématique vue en coupe d'un troisième mode de réalisation de l'invention ;
- [Fig. 4] est une représentation schématique d'une brosse de dérivation selon une alternative de mise en oeuvre de l'invention ;
- [Fig. 5] est un organigramme représentant un procédé de commande de la dérivation d'au moins une portion d'un flux d'objets, selon l'invention ; et
- [Fig. 6] est un organigramme représentant un procédé de tri de déchets selon l'invention.

### Exposé détaillé

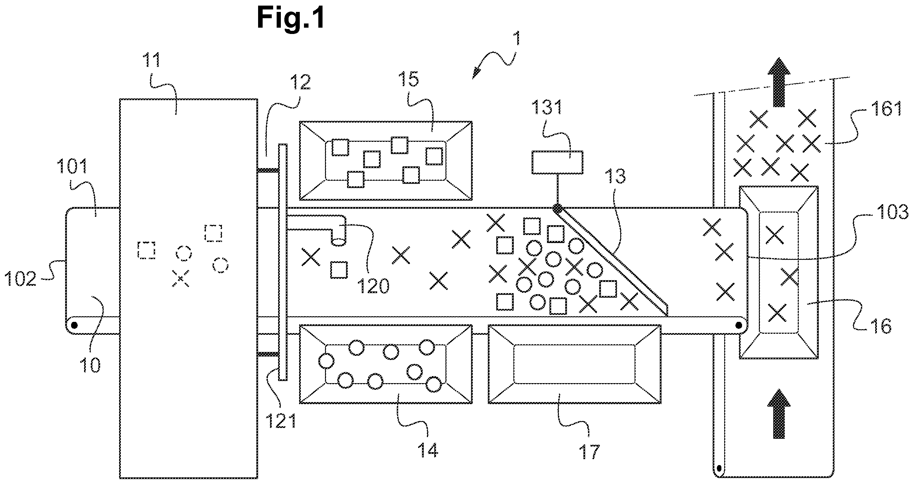

Selon un premier mode de réalisation de l'invention, en référence à la figure 1, un ensemble de recyclage d'objets 1 comprend un circuit de tri 10, comprenant ici un convoyeur à bande comprenant une bande support 101 entraînée en mouvement longitudinal entre une extrémité de chargement 102 et une extrémité de déchargement 103, et convoyant un flux d'objets à recycler comprenant une pluralité d'objets de différents types, le circuit de tri 10 comprenant en outre une pluralité de trémies 14, 15, 16, chaque trémie 14, 15, 16 étant associée à au moins un type d'objet du flux d'objets à recycler.

L'ensemble de recyclage 1 comprend un organe d'identification et de caractérisation 11 installé sur le circuit de tri 10, par exemple dans ce mode de réalisation en surplomb de la bande support 101.

Dans ce mode de réalisation l'organe d'identification et de caractérisation 11 est un robot de tri 11, intégrant une arche d'identification et/ou de caractérisation par détection électromagnétique, et/ou des moyens de reconnaissance d'images pour identifier les objets du flux d'objets passant sous l'arche et un organe de tri 120.

L'invention n'est toutefois pas limitée à un seul type de robot, exposé ici à titre d'exemple, et tout autre type de robot connu de l'art antérieur pourra être adapté à l'invention.

Il existe dans l'art antérieur une grande variété de dispositifs pour détecter, identifier et caractériser des objets d'un flux d'objet à recycler. L'invention étant indépendante de ces organes dès lors qu'ils permettent de communiquer les informations de détection, d'identification et de caractérisation, l'invention peut être adaptée à tout ensemble de recyclage quels que soit les moyens de détection et/ou de caractérisation employés.

Il est fréquent que pour des robots de tri, l'identification soit effectuée par analyse d'image avec support d'une unité d'intelligence artificielle, tel qu'un procédé d'apprentissage automatique, en particulier un procédé d'apprentissage par réseaux de neurones convolutifs, permettant une identification relativement performante des objets.

Toutefois toute autre technique connue de l'homme du métier, tel que des procédés de traitement d'image pour effectuer une identification d'objets dans une image, peut être mis en oeuvre pour l'invention.

Ce robot comprend en outre un organe de tri 12 comportant au moins un bras mobile 120 en translation le long d'un système de rails 121, selon un axe perpendiculaire et optionnellement selon un axe longitudinal à la direction de convoyage des objets du flux d'objets.

Le bras 120 comprend une buse d'aspiration apte à aspirer et maintenir en butée contre ladite buse un objet à trier. Autrement dit la buse d'aspiration produit un effet de succion pour maintenir l'objet à trier contre la buse.

Une fois que le bras 120 a aspiré un objet, il le transporte jusqu'à une trémie latérale 14, 15.

Chaque trémie 14, 15 est conformée pour conduire les objets qui y sont déposés vers différentes destinations, telles que des conteneurs, des transporteurs, des convoyeurs à bande ou tout autre dispositif connu du domaine du tri d'objets.

Les trémies au sens de l'invention 14, 15, 16 peuvent aussi conduire les objets dans des bacs ou des conteneurs d'attente roulants, de sorte que les objets peuvent être soit triés manuellement soit réintégrés plus tard dans le flux d'objets à trier.

Le bras mobile 120 est ici donné à titre d'exemple de réalisation, toutefois l'invention n'est nullement limitée à ce seul organe de tri 12. L'ensemble selon l'invention peut comprendre tout autre organe de tri connu de l'art antérieur, tel qu'un dispositif de préhension, par exemple une buse d'aspiration, mais aussi une pince ou un bras articulé.

Dans ce mode de réalisation, à titre d'exemple non limitatif, deux trémies 14, 15 sont installées, une par côté de la bande support 101, de sorte qu'on peut extraire, en fonction du besoin, deux sortes d'objets différents ou plus, en particulier de par leur nature ou leur matériau.

Les objets non extraits sont alors convoyés jusqu'à l'extrémité de déchargement 103 et tombent dans une troisième trémie 16.

Dans ce mode de réalisation, la troisième trémie 16 conduit les objets jusqu'à une autre bande de convoyage 161.

Ce mode de tri à trois trémies 14, 15, 16 permet d'effectuer par exemple un tri à trois fractions, dans lequel une première trémie, par exemple la trémie 15, est destinée à recevoir une éjection de tri positif d'un type recyclable, une deuxième trémie, par exemple la trémie 14, est destinée à recevoir une éjection de tri négatif d'impureté ou d'un flux à trier plus en aval, et un flux non éjecté de recyclable, ici la troisième trémie 16.

L'ensemble 1 comprend un organe de dérivation du flux 13, ici une paroi 13 mobile en rotation, telle qu'une plaque 13, conformée pour passer d'une première position d'attente dans laquelle la paroi 13 ne s'oppose pas au flux convoyé par la bande de convoyage, à une position de dérivation, telle que représentée figure 1, dans laquelle la paroi 13 forme barrage au convoyage des objets jusqu'à la troisième trémie 16 et dérive le flux d'objets vers une trémie de dérivation 17.

L'invention n'est toutefois pas limitée à un type particulier de dispositif de dérivation du flux 13. En effet, le type du dispositif de dérivation du flux 13 et indépendant de l'organe de détection et/ou de caractérisation 11 mis en oeuvre. Il est en notamment possible de combiner les différents dispositifs de dérivation du flux 13 exposés dans la présente invention avec les différents organes de détection et/ou de caractérisation 11 décrits ou connus de l'homme du métier.

En particulier, le dispositif de dérivation 13 peut être obtenu par tout moyen connu pour retirer un flux d'objet d'une bande support 101, tel que des organes poussoirs, ou encore des bras de préhension.

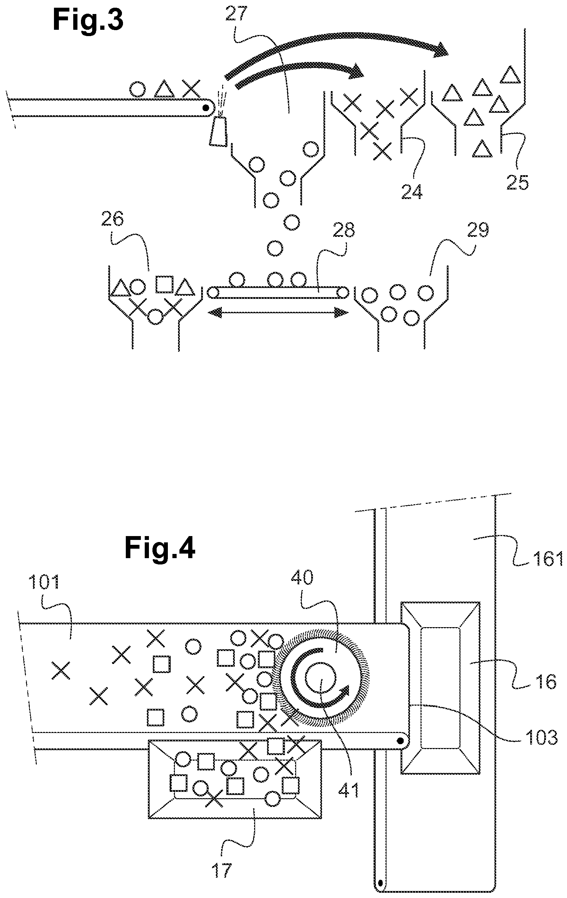

Une alternative de réalisation de l'invention comprend, en référence à la figure 4, la mise en oeuvre d'un organe de dérivation du flux comprenant une brosse 40 montée à rotation sur un axe 41 s'étendant perpendiculairement au plan de la bande support 101.

La brosse 40 est escamotable, de sorte qu'elle peut passer d'une première position d'attente dans laquelle elle est maintenue à distance de la bande support 101, vers une deuxième position de dérivation, dans laquelle elle fait barrière au passage du flux d'objets convoyé par la bande support 101, éjectant le flux d'objet de la bande 101 sous l'effet rotatif de la brosse dans la trémie de dérivation 17. L'escamotage de la brosse 40 peut être effectué selon toute direction pertinente, horizontale, verticale ou oblique dès lors que les deux positions peuvent être atteintes.

À titre d'exemple le déplacement de la brosse 40 peut résulter d'un mouvement translatif, rotatif ou d'une combinaison de ces mouvements de sorte à permettre le passage rapide de la brosse 40 de sa position escamotée à sa position de dérivation.

L'ensemble de recyclage d'objets 1 comprend un organe de commande 131 apte à commander le dispositif de dérivation 13.

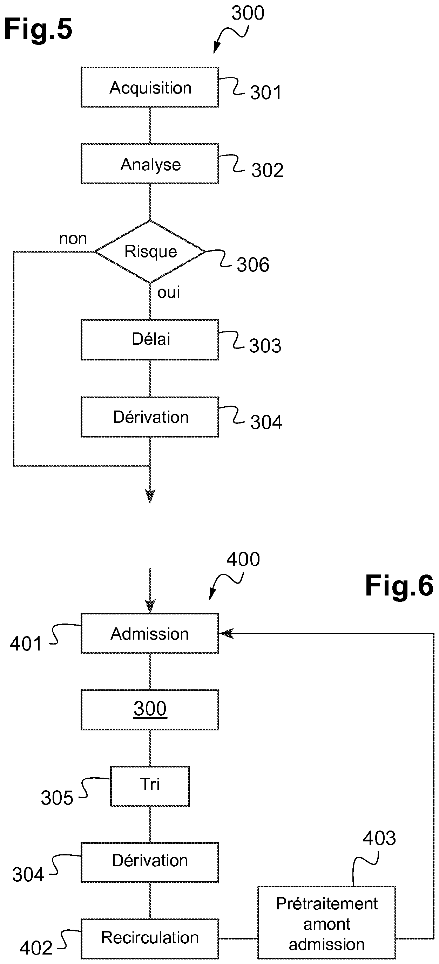

L'organe de commande 131 met en oeuvre à cet effet un procédé de commande 300, en référence à la figure 5.

Le procédé de commande 300 comprend une première étape 301 d'acquisition d'au moins une donnée d'information sur le fonctionnement dudit organe d'identification et de caractérisation et/ou au moins une valeur de caractérisation du flux d'objets.

À cet effet l'organe de commande 131 est connecté au robot de tri 11 de sorte à recevoir, des informations relatives à la caractérisation ou à l'identification de chaque objet du flux d'objet ou relatives au fonctionnement du robot de tri 11.

On entend par une donnée d'information sur le fonctionnement de l'organe d'identification et de caractérisation 11, des données d'alerte d'un fonctionnement incorrect ou en défaut de l'organe d'identification et de caractérisation 11.

La valeur de caractérisation du flux d'objets quant à elle correspond à une valeur de définition du flux d'objet analysé par l'arche de caractérisation du robot. Cette valeur de caractérisation peut être en particulier une caractérisation locale du flux d'objets, autrement dit d'une portion du flux d'objets, correspondant à la portion analysée pour un instant donné par le robot de tri 11.

En particulier, lorsque le robot de tri 11 détecte qu'un trop grand nombre d'objets ciblés est présent sur une portion de la bande de convoyage 101 par rapport à la capacité de tri de l'organe de tri 12, il transmet une donnée d'alerte à l'organe de commande 131 pour commander la dérivation d'une portion du flux d'objets.

Ici on procède à la détection du trop grand nombre d'objets en fonction des données de caractérisation acquises par le robot de tri 11, par le calcul d'un taux de couverture, que l'on peut aussi appeler densité surfacique d'objets sur au moins une portion de la bande de convoyage.

Lorsque ce taux de couverture est supérieur à une valeur de seuil prédéterminée, alors les capacités de tri de l'organe de tri 12 sont considérées comme dépassées.

Toutefois toute valeur de caractérisation du flux d'objets, quelle que soit la portion de flux considérée, peut être analysée par l'organe de commande 131.

Selon une mise en oeuvre particulière du procédé, on peut prévoir une communication entre l'organe de commande 131 et l'organe de tri 12 de sorte qu'en cas de défaillance de l'organe de tri 12, l'organe de commande 131 commande la dérivation du flux d'objets.

Le procédé de commande 300 met alors en oeuvre une deuxième étape 302 d'analyse des données reçues.

Les valeurs de caractérisation, telles que la densité surfacique ou le nombre d'objets indésirable, sont comparées à des valeurs de seuil prédéfinies.

Si la valeur de caractérisation dépasse ladite valeur de seuil ou si une donnée d'information sur le fonctionnement de l'organe d'identification et de caractérisation 11 relative à un défaut de fonctionnement est détectée, tel que représenté figure 5 sous forme d'une condition de risque 306, alors le procédé 300 peut mettre en oeuvre une étape de dérivation 304 dans laquelle il commande l'activation de l'organe de dérivation 13.

Toutefois, le robot 11 étant installé à distance de l'organe de dérivation 13, le procédé met en oeuvre une période de latence 303 en fonction de la vitesse de convoyage du flux ou de toute autre paramètre adapté pour déterminer à quel instant l'actionnement du de l'organe de dérivation permettra de dériver le flux d'objets.

Ce procédé de commande 300 est intégré dans un procédé de tri 400 plus général, en particulier un procédé de tri de déchets 400, en référence à la figure 6, qui comprend une première étape d'admission 401 d'un flux d'objets sur le dispositif de convoyage 10.

Ensuite, le procédé de tri 400 met en oeuvre le procédé de commande 300 de la dérivation.

Selon une mise en oeuvre particulière de l'invention, lorsque l'étape de dérivation 304 est mise en oeuvre, on peut procéder à la recirculation 402 du flux d'objets dérivé. Cette recirculation comprend alors avantageusement une étape de prétraitement 403 du flux d'objets dérivé en vue d'une réintroduction dans une zone d'admission 401.

L'invention ne se limite pas à une seule solution de recirculation d'objets issus de la dérivation du flux, et l'homme du métier sera apte à adapter l'étape de recirculation 402 ainsi que l'étape de prétraitement 403 aux spécificités techniques de chaque ensemble de recyclage 1.

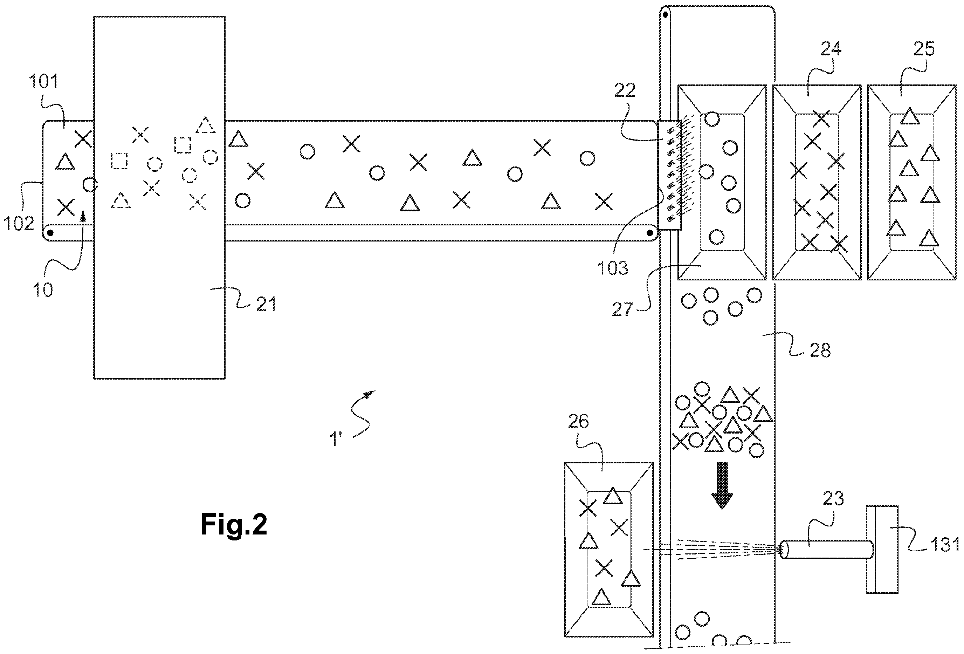

Selon un deuxième mode de réalisation de l'invention, en référence à la figure 2, un ensemble de recyclage d'objets 1' comprend un circuit de tri 10, comportant convoyeur à bande 101 formé ici d'une bande support 101 entraînée en mouvement longitudinale entre une extrémité de chargement 102 et une extrémité de déchargement 103, et convoyant un flux d'objets à recycler, au moins un moteur, non représenté, pour entraîner en mouvement ladite bande support 101, le circuit de tri 10 comprenant en outre une pluralité de trémies 27, 24, 25, chaque trémie 27, 24, 25 étant associée à au moins un type d'objet du flux d'objets à recycler.

L'ensemble de recyclage 1' comprend un organe d'identification et de caractérisation 21 monté sur le dispositif de convoyage 10.

L'organe d'identification et de caractérisation 21 est dans ce mode de réalisation une arche de caractérisation 21, montée sur le dispositif de convoyage, de sorte à ce que la bande support 101 passe sous l'arche de caractérisation 21.

Dans ce deuxième mode de réalisation, l'arche de caractérisation 21 met en oeuvre des moyens de spectroscopie proche infrarouge, plus communément connu sous son abréviation anglophone *NIR Spectroscopy* pour caractériser le matériau constituant les objets du flux d'objets et détecter parmi eux les objets indésirables, autrement dit les objets faits d'un matériau non attendu dans cet ensemble de recyclage.

Cependant, la technologie NIR permet seulement de détecter la signature spectrale surfacique des objets. Aussi, selon un mode de réalisation particulier basé sur le deuxième mode de réalisation, on met aussi en oeuvre l'identification de la matière de chaque objet du flux d'objets par reconstruction de son image, en fonction des données acquises par l'arche de caractérisation NIR.

En effet, à titre d'exemple non limitatif, une bouteille en matériau plastique peut comprendre une multitude de couches de matériaux, avec une couche externe recyclable tandis qu'au moins une couche interne ne l'est pas. La technologie NIR serait alors induite en erreur par la couche externe et pourrait conclure que l'objet entier est recyclable. Dans un tel cas, seule l'identification de l'objet, et non pas seulement de son matériau externe, permet de déterminer de manière fiable si l'objet est recyclable.

Dans ce mode de réalisation particulier basé sur le deuxième mode de réalisation, l'arche de caractérisation 21 comprend des moyens d'identification des objets, aptes à déterminer la nature de chaque objet de sorte à améliorer le processus de recyclage. Ces moyens d'identification comprennent au moins un processeur apte à calculer une reconstruction d'image sur à partir de données acquises par l'arche de caractérisation 1.

Toutefois le mode de réalisation particulier décrit précédemment nécessite, pour réaliser la reconnaissance d'objets, une rapidité de calcul particulièrement élevée, compte tenu de la cadence de caractérisation élevée des arches de caractérisation NIR.

C'est pourquoi dans le deuxième mode de réalisation de l'invention, l'arche de caractérisation 21 ne comprend aucun moyen supplémentaire d'identification des objets. L'identification des objets indésirables n'est réalisée que sur la base de la caractérisation de chaque objet, autrement dit sur la base du matériau constituant la couche superficielle de chaque objet.

L'identification d'objets est ici réalisée à partir des données de caractérisation acquises par spectroscopie proche infrarouge.

L'arche de caractérisation 21 permet ainsi de déterminer dans le flux d'objets s'il existe des objets ciblés.

À cet effet, l'ensemble de recyclage 1', tel que représenté figure 2, comprend un organe de tri 22 installé dans le circuit de tri 10, en aval de l'arche de caractérisation 21 et adapté pour retirer du flux d'objets les objets indésirables identifiés.

Dans ce mode de réalisation, l'organe de tri 22 est un dispositif de soufflage à air comprimé 22 installé à l'extrémité de déchargement 103, qui comprend une pluralité de buses installées de manière régulièrement espacées et transversalement par rapport à la bande support 101.

Lorsqu'un objet atteint l'extrémité de déchargement 103, cet objet passe en surplomb d'au moins une buse du dispositif de soufflage 22.

Si la buse ne produit aucun souffle, alors l'objet tombera dans une première trémie 27, tandis que si la buse produit un souffle d'air comprimé, l'objet sera soufflé et expulsé vers une deuxième trémie 24 ou une troisième trémie 25, en fonction de la puissance du souffle émis par la buse.

Le système de buse est ici décrit à titre d'exemple, mais tout autre type de tri connu dans l'art antérieur pourra s'y substituer.

Comme pour le premier mode de réalisation, le choix des objets soufflés ou non dans chaque trémie 24, 25, 27 est fonction des besoins de l'homme du métier sur le tri positif et/ou négatif à réaliser.

De la même manière que pour le premier mode de réalisation de l'invention chaque trémie 24, 25, 27 peut conduire les objets vers tout type de destination, conteneur, transporteur, convoyeur ou tout autre dispositif en fonction du besoin de l'installation de tri.

À cet effet, et à titre d'exemple, lorsqu'un objet d'un premier type recyclable est détecté, on laisse l'objet tomber dans la première trémie 27, sans actionner les buses, ce qui correspond à un premier tri positif.

Dans ce mode de réalisation, la première trémie 27 guide les objets vers une deuxième bande support 28, en aval de la première bande 101, conformée pour conduire les objets du premier type recyclable vers une autre étape, non détaillée, du processus de recyclage.

Si un objet indésirable est détecté, on commande à l'organe de tri 22 d'actionner, pour une première valeur de pression d'expulsion, une ou plusieurs buses, les plus proches de la position latérale de l'objet indésirable sur la bande support 101, de sorte à expulser l'objet indésirable vers le la deuxième trémie 24 lorsque l'objet atteint l'extrémité de déchargement 103. Ceci constitue un tri dit négatif, autrement dit visant à retirer du flux des objets indésirables.

Si un objet recyclable d'un deuxième type est détecté, on commande alors à la buse correspondante de s'actionner, selon une deuxième valeur de pression d'expulsion, de sorte à expulser l'objet recyclable vers la troisième trémie 25, formant un second tri positif.

Toutefois, lorsqu'un taux de couverture, que l'on peut aussi appeler densité surfacique d'objets sur au moins une portion de la bande de convoyage, est supérieure à une valeur de seuil prédéterminée, alors l'organe de tri 22, ici le dispositif de soufflage 22, risque de provoquer l'entraînement d'objets voisins à l'objet à souffler, risquant de provoquer une pollution du flux trié sur les sous-bandes. Aussi on déclenche la dérivation de la portion de flux (après tri) dont la densité surfacique est trop importante (avant tri).

Ici, l'arche de caractérisation 21 détermine au moins une valeur de caractérisation du flux d'objets analysé par l'arche à un instant donné, pour une unité de surface du flux, ici ladite portion de convoyage *vue* par l'arche de caractérisation 21.

La valeur de caractérisation est une valeur permettant de déterminer notamment la qualité du flux, aussi appelée pureté du flux, en particulier la quantité d'objets indésirables dans le flux par unité de surface ou le taux d'objets indésirables dans le flux d'objets par unité de surface. L'objectif de la valeur de caractérisation est de déterminer si l'organe de tri a la capacité à expulser du flux tous les objets ciblés identifiés.

Si le taux d'objets indésirables ou si la densité surfacique des objets est trop important, il existe le risque que l'organe de tri 22 n'ait pas la capacité de retirer tous les objets du flux.

Aussi, dans un tel cas, l'ensemble de recyclage comprend un dispositif de dérivation du flux 23, apte à extraire du circuit de tri 10 au moins une portion du flux d'objets.

Le dispositif de dérivation du flux 23 est dans cet exemple de réalisation un autre organe de soufflage 23 à air comprimé, installé en bordure latérale de la deuxième bande support 28, orienté selon une direction traversante et rasante, de sorte que l'air propulsé par l'organe de soufflage 23 expulse latéralement les objets présents sur la deuxième bande support 28, de sorte à les faire tomber dans une quatrième trémie 26, aussi appelée trémie de dérivation 26, conduisant le flux d'objets dérivé vers une zone de retraitement, en vue par exemple d'une réinsertion plus tardive en entrée du flux d'objets à trier.

Le positionnement particulier de l'organe de soufflage n'est toutefois pas donné de manière limitative, tout autre disposition de l'organe de soufflage adaptée pour expulser le flux d'objets de la deuxième bande support 28 vers la trémie de dérivation 26 pouvant être mis en oeuvre.

L'invention n'est toutefois pas limitée à un type particulier de dispositif de dérivation du flux 23. Le dispositif de dérivation 23 peut notamment être obtenu par tout moyen connu pour retirer un flux d'objet d'une bande support 101, tel qu'une brosse rotative décrite précédemment en référence à la figure 4, des organes poussoirs, ou encore des bras de préhension.

Selon un troisième mode de réalisation de l'invention, en référence à la figure 3, qui est une modification du deuxième mode de réalisation de l'invention, la deuxième bande support 28 est commandée de sorte qu'elle forme organe de dérivation. En ce sens, la deuxième bande support est, en fonctionnement normal, entraîné en mouvement de sorte à transporter les objets tombant dessus depuis la trémie 27 vers une cinquième trémie 29. Toutefois lorsqu'une dérivation d'une portion du flux d'objets est nécessaire, alors la deuxième bande support est commandée de sorte que son sens de déplacement des objets est inversé, conduisant l'ensemble des objets vers la trémie de dérivation 26.

Par ailleurs, il existe des cas où certains objets sont non seulement indésirables mais totalement proscrits. Par exemple, dans un flux de bouteilles à recycler, il existe certains objets, tels que des objets comprenant des métaux lourds, des téléphones portables notamment, qui doivent être totalement proscrits.

Aussi, selon un mode de réalisation particulier de l'invention, la présence d'un téléphone portable, aussi appelé GSM, ou tout autre objet comprenant des métaux lourds, et plus généralement tout objet proscrit dans le flux d'objet, identifié par l'arche de caractérisation 11 ou 21, commande la dérivation de la portion de flux comprenant l'objet proscrit de sorte à s'assurer que cet objet proscrit ne soit pas présent dans le flux après tri.

En particulier, en absence de tri manuel en aval, lorsqu'un objet proscrit est détecté, et s'il n'existe pas de certitude que l'objet soit extrait du flux, alors on procède à la dérivation de la portion de flux dans lequel l'objet est présent de sorte à s'assurer de son isolement.

À contrario, s'il existe un tri manuel aval, alors la détection de l'objet proscrit associé à l'absence de certitude de son extraction, génère un signal d'alerte à destination des trieurs manuels.

Ainsi on améliore la qualité du flux en s'assurant qu'un objet interdit ne puisse accidentellement être présent dans le flux trié.

Dans un tel cas le flux peut être dirigé vers un conteneur de mise en quarantaine pour s'assurer de la non-réintroduction de l'objet interdit dans le flux d'objets à trier. On peut à cet effet installer deux dispositifs de dérivation 13, 23, un pour les objets indésirables et un pour les objets proscrits. Le procédé 300 est alors adapté pour activer le dispositif de dérivation correspondant à l'objet indésirable ou proscrit détecté.

L'invention n'est pas limitée à ces deux seuls modes de réalisation, et les premier et deuxième modes de réalisations peuvent être combinés et adaptés l'un par rapport à l'autre. En ce sens, le deuxième mode de réalisation pourrait comprendre un deuxième dispositif de convoyage 161 tel que décrit par le premier mode de réalisation, et/ou un dispositif de dérivation 23 par soufflage à air comprimé.

De la même manière le premier mode de réalisation pourrait recevoir le flux dérivé dans un conteneur 27 plutôt que sur le deuxième dispositif de convoyage 16, et/ou pourrait comprend des moyens de dérivation à plaque mobile plutôt que par soufflage à air comprimé ; ces exemples étant donnés à titre non limitatifs.

## Revendications

1. Ensemble de tri d'objets (1, 1 '), comportant :
- un circuit de tri (10) comprenant au moins une bande support (101) entraînée en mouvement convoyant un flux d'objets à recycler comprenant une pluralité d'objets de différents types, et une pluralité de trémies (14, 15, 16, 24, 25, 27), chaque trémie (14, 15, 16, 24, 25, 27) étant associée à au moins un type d'objet du flux d'objets à recycler ;
- un organe d'identification et/ou de caractérisation (11, 21) adapté pour identifier et/ou caractériser dans ledit flux d'objets des objets ciblés en fonction de leur type, et apte à déterminer au moins une valeur de caractérisation du flux d'objets ;
- un organe de tri (12, 22) adapté pour diriger lesdits objets ciblés dans ladite trémie associée au type de l'objet ciblé ;
**caractérisé en ce qu'**il comprend en outre :
- un dispositif de dérivation (13, 23) du flux d'objets, apte à dériver au moins une portion du flux d'objets dans une trémie de dérivation (17, 26) ; et
- un organe de commande (131) adapté pour recevoir dudit organe d'identification et de caractérisation (11, 21) au moins une donnée d'information sur le fonctionnement dudit organe d'identification et/ou de caractérisation et/ou au moins une valeur de caractérisation du flux d'objets ; l'organe de commande (131) étant en outre adapté pour commander audit dispositif de dérivation (13, 23) du flux la dérivation d'au moins une portion du flux d'objets dans ladite trémie de dérivation (17) en fonction de ladite au moins une donnée d'information et/ou de ladite au moins une donnée de caractérisation du flux d'objets reçue.

2. Ensemble de tri d'objets (1, 1') selon la revendication 1, **caractérisé en ce que** ledit organe de commande (131) est adapté pour :
- recevoir au moins une donnée d'alerte indiquant un arrêt et/ou une défaillance dudit organe d'identification et/ou de caractérisation (11, 21);
- lors de la réception de ladite donnée d'alerte, commander la dérivation de ladite au moins une portion de flux d'objets ;
ledit organe de commande (131) étant en outre adapté pour recevoir une donnée de fin d'alerte apte à commander l'arrêt de la dérivation dudit flux d'objets.

3. Ensemble de tri d'objets (1, 1') selon la revendication 1 ou 2, **caractérisé en ce que** ledit organe d'identification et de caractérisation (11, 21) est adapté pour déterminer un taux de couverture d'au moins une portion de la bande support (101) par le flux d'objets ; ledit organe de commande (131) étant adapté pour :
- recevoir ledit taux de couverture ;
- comparer ledit taux de couverture avec une valeur prédéfinie de seuil de couverture maximale ; et
- si le taux de couverture est supérieure à ladite valeur prédéfinie de seuil de couverture maximale, commander la dérivation dudit flux d'objets pour ladite portion de la bande support (101) mesurée.

4. Ensemble de tri d'objets (1, 1') selon l'une quelconque des revendications 1 à 3, **caractérisé en ce que** ledit organe d'identification et/ou de caractérisation (11,21) est adapté pour déterminer un taux d'objets ciblés sur au moins une portion de la bande support (101) ; ledit organe de commande étant adapté pour :
- recevoir ledit taux d'objets ciblés ;
- comparer ledit taux d'objets ciblés avec une valeur prédéfinie de seuil maximal d'objets ciblés ; et
- si le taux d'objets ciblés est supérieure à ladite valeur prédéfinie de seuil maximal d'objets ciblés, commander la dérivation dudit flux d'objets pour ladite portion de la bande support (101) mesurée.

5. Ensemble de tri d'objets (1, 1') selon l'une quelconque des revendications 1 à 4, **caractérisé en ce que** :
- ledit organe d'identification et de caractérisation (21) comprend une arche de caractérisation et/ou d'identification, telle qu'une arche de caractérisation par spectrométrie proche infra-rouge (11), indépendante de l'organe de tri (22) ; ou
- ledit organe de tri (12) et ledit organe d'identification et/ou de caractérisation (11) sont intégrés dans un robot trieur (11).

6. Ensemble de tri d'objets (1, 1') selon l'une quelconque des revendications 1 à 5, **caractérisé en ce que** ledit dispositif de dérivation (13) comprend une paroi (13) mobile en rotation, adaptée pour passer d'une première position d'attente dans laquelle les objets convoyés par la bande de convoyage longent ladite paroi (13), à une position de dérivation dans laquelle la paroi (13) forme barrage de sorte à dériver ladite au moins une portion du flux d'objets dans ladite trémie de dérivation (17).

7. Ensemble de tri d'objets (1, 1') selon l'une quelconque des revendications 1 à 5, dans lequel le circuit de tri comprend une première bande support (101) et une deuxième bande support (28) installée de sorte à pouvoir recevoir au moins une partie des objets convoyés par la première bande support (101), **caractérisé en ce que** ledit dispositif de dérivation (13) comprend un organe de soufflage (23) installé au voisinage de ladite deuxième bande support (28) et adapté pour générer un souffle apte à dériver au moins une partie du flux d'objets de la deuxième bande support (28) vers la trémie de dérivation (26).

8. Procédé de dérivation (300) d'un flux d'objets dans un ensemble de tri d'objets (1, 1') selon l'une quelconque des revendications 1 à 7, **caractérisé en ce qu'**il comprend :
- une étape d'acquisition (301) d'au moins une donnée d'information sur le fonctionnement dudit organe d'identification et/ou de caractérisation et/ou au moins une donnée de caractérisation du flux d'objets convoyé ;
- une étape de commande (304) du dispositif de dérivation du flux en fonction (302, 306) de ladite au moins une donnée d'information et/ou de ladite au moins une donnée de caractérisation du flux d'objets convoyé reçue.

9. Procédé de tri (400) d'un flux de déchets dans un ensemble de tri d'objets (1, 1') selon l'une quelconque des revendications 1 à 7, **caractérisé en ce qu'**il comprend en continu :
- une étape d'admission (401) d'un flux de déchets sur le dispositif de convoyage ;
- une étape de tri (305) par l'organe de tri (1) des déchets du flux de déchets ; et
- la mise en oeuvre du procédé (300) de dérivation selon la revendication 8.

10. Procédé de tri (400) selon la revendication 9, **caractérisé en ce qu'**il comprend, lorsqu'au moins une portion du flux de déchets est dérivée :
- une étape de recirculation (402) de ladite au moins une portion du flux de déchets, et avantageusement une étape de prétraitement (403) du flux d'objet recirculé, de sorte à réintroduire ladite au moins une portion du flux de déchets dans le flux de déchets admis à l'étape d'admission (401), et/ou
- lorsqu'un objet proscrit est détecté dans ladite au moins une portion de flux de déchets dérivée, une étape de mise en quarantaine de ladite au moins une portion de flux de déchets dérivée.

## Patentansprüche

1. Objektsortieranordnung (1, 1`), die Folgendes beinhaltet:
- einen Sortierkreislauf (10), der mindestens ein angetriebenes, sich bewegendes Trägerband (101), das einen Strom von zu recycelnden Objekten befördert, der eine Vielzahl von Objekten unterschiedlicher Art umfasst, und eine Vielzahl von Trichtern (14, 15, 16, 24, 25, 27) umfasst, wobei jeder Trichter (14, 15, 16, 24, 25, 27) mindestens einer Art von Objekten aus dem Strom von zu recycelnden Objekten zugeordnet ist;
- ein Identifizierungs- und/oder Charakterisierungselement (11, 21), das dazu ausgelegt ist, Zielobjekte in dem Strom von Objekten entsprechend ihrer Art zu identifizieren und/oder zu charakterisieren, und dazu geeignet ist, mindestens einen Charakterisierungswert des Stroms von Objekten zu bestimmen;
- ein Sortierelement (12, 22), das dazu ausgelegt ist, die Zielobjekte in den Trichter zu leiten, der der Art des Zielobjekts zugeordnet ist;
**dadurch gekennzeichnet, dass** sie ferner Folgendes umfasst:
- eine Vorrichtung (13, 23) zum Umleiten des Stroms von Objekten, die dazu geeignet ist, mindestens einen Teil des Stroms von Objekten in einen Umleitungstrichter (17, 26) umzuleiten; und
- ein Steuerelement (131), das dazu ausgelegt ist, von dem Identifizierungs- und Charakterisierungselement (11, 21) mindestens eine Informationsangabe über den Betrieb des Identifizierungs- und/oder Charakterisierungselements und/oder mindestens einen Charakterisierungswert des Stroms von Objekten zu empfangen; wobei das Steuerelement (131) ferner dazu ausgelegt ist, die Stromumleitungsvorrichtung (13, 23) zur Umleitung mindestens eines Teils des Stroms von Objekten in dem Umleitungstrichter (17) in Abhängigkeit von der mindestens einen empfangenen Informationsangabe und/oder der mindestens einen empfangenen Charakterisierungsangabe des Stroms von Objekten zu steuern.

2. Objektsortieranordnung (1, 1') nach Anspruch 1, **dadurch gekennzeichnet, dass** das Steuerelement (131) für Folgendes ausgelegt ist:
- Empfangen mindestens einer Alarmangabe, die eine Beendigung und/oder eine Fehlfunktion des Identifizierungs- und/oder Charakterisierungselements (11, 21) angibt;
- nach dem Empfangen der Alarmangabe, Steuern der Umleitung des mindestens einen Teils des Stroms von Objekten;
wobei das Steuerelement (131) ferner dazu ausgelegt ist, eine Alarmende-Angabe zu empfangen, die dazu geeignet ist, das Beenden der Umleitung des Stroms von Objekten zu steuern.

3. Objektsortieranordnung (1, 1') nach Anspruch 1 oder 2, **dadurch gekennzeichnet, dass** das Identifizierungs- und Charakterisierungselement (11, 21) dazu ausgelegt ist, einer Deckungsrate von mindestens einem Teil des Trägerbands (101) durch den Strom von Objekten zu bestimmen; wobei das Steuerelement (131) für Folgendes ausgelegt ist:
- Empfangen der Deckungsrate;
- Vergleichen der Deckungsrate mit einem vordefinierten maximalen Deckungsschwellenwert; und
- wenn die Deckungsrate größer ist als der vordefinierte maximale Deckungsschwellenwert, Steuern der Umleitung des Stroms von Objekten für den Teil des gemessenen Trägerbands (101).

4. Objektsortieranordnung (1, 1') nach einem der Ansprüche 1 bis 3, **dadurch gekennzeichnet, dass** das Identifizierungs- und/oder Charakterisierungselement (11, 21) dazu ausgelegt ist, eine Rate von Zielobjekten auf mindestens einem Teil des Trägerbands (101) zu bestimmen; wobei das Steuerelement für Folgendes ausgelegt ist:
- Empfangen der Rate der Zielobjekte;
- Vergleichen der Rate der Zielobjekte mit einem vordefinierten maximalen Schwellenwert an Zielobjekten; und
- wenn die Rate der Zielobjekte größer ist als der vordefinierte maximale Schwellenwert der Zielobjekte, Steuern der Umleitung des Stroms von Objekten für den Teil des gemessenen Trägerbands (101).

5. Objektsortieranordnung (1, 1') nach einem der Ansprüche 1 bis 4, **dadurch gekennzeichnet, dass**:
- das Identifizierungs- und Charakterisierungselement (21) einen Charakterisierungs- und/oder Identifizierungsbogen, zum Beispiel einen Charakterisierungsbogen (11) für die Nahinfrarot-Spektrometrie, unabhängig vom Sortierelement (22) umfasst; oder
- das Sortierelement (12) und das Identifizierungs- und/oder Charakterisierungselement (11) in einen Sortierroboter (11) integriert sind.

6. Objektsortieranordnung (1, 1') nach einem der Ansprüche 1 bis 5, **dadurch gekennzeichnet, dass** die Umleitungsvorrichtung (13) eine drehbewegliche Wand (13) umfasst, die dazu ausgelegt ist, sich aus einer ersten Warteposition, in der die vom Förderband beförderten Objekte entlang der Wand (13) laufen, in eine Umleitungsposition, in der die Wand (13) eine Barriere bildet, um den mindestens einen Teil des Stroms von Objekten im Umleitungstrichter (17) umzuleiten, zu bewegen.

7. Objektsortieranordnung (1, 1') nach einem der Ansprüche 1 bis 5, wobei der Sortierkreislauf ein erstes Trägerband (101) und ein zweites Trägerband (28) umfasst, die derart installiert sind, dass sie mindestens einen Teil der vom ersten Trägerband (101) beförderten Objekte aufnehmen können, **dadurch gekennzeichnet, dass** die Umleitungsvorrichtung (13) ein Gebläseelement (23) umfasst, das in der Nähe des zweiten Trägerbands (28) installiert und dazu ausgelegt ist, einen Luftstrom zu erzeugen, der dazu geeignet ist, einen Teil des Stroms von Objekten vom zweiten Trägerband (28) in Richtung des Umleitungstrichters (26) umzuleiten.

8. Verfahren zum Umleiten (300) eines Stroms von Objekten in einer Objektsortieranordnung (1, 1') nach einem der Ansprüche 1 bis 7, **dadurch gekennzeichnet, dass** es Folgendes umfasst:
- einen Schritt des Erfassens (301) von mindestens einer Informationsangabe über den Betrieb des Identifizierungs- und/oder Charakterisierungselements und/oder mindestens einer Charakterisierungsangabe über den Strom von beförderten Objekten;
- einen Schritt des Steuerns (304) der Stromumleitungsvorrichtung (302, 306) in Abhängigkeit von der mindestens einen empfangenen Informationsangabe und/oder der mindestens einen empfangenen Charakterisierungsangabe des Stroms von beförderten Objekten.

9. Verfahren zum Sortieren (400) eines Abfallstroms in einer Objektsortieranordnung (1, 1') nach einem der Ansprüche 1 bis 7, **dadurch gekennzeichnet, dass** es kontinuierlich Folgendes umfasst:
- einen Schritt des Aufnehmens (401) eines Abfallstroms auf die Fördervorrichtung;
- einen Schritt des Sortierens (305) von Abfällen aus dem Abfallstrom durch das Sortierelement (1); und
- Durchführen des Umleitungsverfahrens (300) nach Anspruch 8.

10. Sortierverfahren (400) nach Anspruch 9, **dadurch gekennzeichnet, dass** es Folgendes umfasst, wenn mindestens ein Teil des Abfallstroms umgeleitet wird:
- einen Schritt des Rezirkulierens (402) des mindestens einen Teils des Abfallstroms und vorteilhafterweise einen Schritt des Vorbehandelns (403) des rezirkulierten Stroms von Objekten, um den mindestens einen Teil des Abfallstroms wieder in den im Schritt des Aufnehmens (401) aufgenommenen Abfallstrom einzuführen, und/oder
- wenn ein verbotenes Objekt in dem mindestens einen Teil des umgeleiteten Abfallstroms detektiert wird, ein Schritt des Isolierens des mindestens einen Teils des umgeleiteten Abfallstroms.

## Claims

1. An object sorting assembly (1, 1'), including:
- a sorting circuit (10) comprising at least one support belt (101) driven in movement conveying a flow of objects to be recycled comprising a plurality of objects of different types, and a plurality of hoppers (14, 15, 16, 24, 25, 27), each hopper (14, 15, 16, 24, 25, 27) being associated with at least one type of object from the flow of objects to be recycled;
- an identification and/or characterisation member (11, 21) adapted to identify and/or characterise targeted objects in said flow of objects depending on their type, and capable of determining at least one characterisation value of the flow of objects;
- a sorting member (12, 22) adapted to direct said targeted objects into said hopper which is associated with the type of the targeted object;
**characterised in that** it further comprises:
- a device (13, 23) for diverting the flow of objects, capable of diverting at least one portion of the flow of objects into a diversion hopper (17, 26); and
- a control member (131) adapted to receive, from said identification and characterisation member (11, 21), at least one data of information on the operation of said identification and/or characterisation member and/or at least one value for characterising the flow of objects, the control member (131) being further adapted to order to said flow diversion device (13, 23) the diversion of at least one portion of the flow of objects into said diversion hopper (17) depending on said at least one data of information and/or said at least one data for characterising the flow of objects which is received.

2. The object sorting assembly (1, 1') according to claim 1, **characterised in that** said control member (131) is adapted to:
- receive at least one alert data indicating a stop and/or a failure of said identification and/or characterisation member (11, 21);
- upon receipt of said alert data, order the diversion of said at least one portion of flow of objects;
said control member (131) being further adapted to receive end of alert data capable of ordering stopping the diversion of said flow of objects.

3. The object sorting assembly (1, 1') according to claim 1 or 2, **characterised in that** said identification and characterisation member (11, 21) is adapted to determine a coverage rate of at least one portion of the support belt (101) by the flow of objects; said control member (131) being adapted to:
- receive said coverage rate;
- compare said coverage rate with a predefined maximum coverage threshold value; and
- if the coverage rate is greater than said predefined maximum coverage threshold value, ordering the diversion of said flow of objects for said portion of the support belt (101) which is measured.

4. The object sorting assembly (1, 1') according to any one of claims 1 to 3, **characterised in that** said identification and/or characterisation member (11, 21) is adapted to determine a targeted object rate on at least one portion of the support belt (101); said control member being adapted to:
- receive said targeted object rate,
- compare said targeted object rate with a predefined value of maximum targeted object threshold; and
- if the targeted object rate is greater than said predefined value of maximum targeted object threshold, order the diversion of said flow of objects for said portion of the support belt (101) which is measured.

5. The object sorting assembly (1, 1') according to any one of claims 1 to 4, **characterised in that**:
- said identification and characterisation member (21) comprises a characterisation and/or identification arch, such as a near-infrared spectrometry characterisation arch (11), independent of the sorting member (22); or
- said sorting member (12) and said identification and/or characterisation member (11) are integrated into a sorting robot (11).

6. The object sorting assembly (1, 1') according to any one of claims 1 to 5, **characterised in that** said diversion device (13) comprises a wall (13) which is movable in rotation, adapted to pass from a first waiting position in which the objects conveyed by the conveyor belt run along said wall (13), to a diverting position in which the wall (13) forms a barrier so as to divert said at least one portion of the flow of objects into said diversion hopper (17).

7. The object sorting assembly (1, 1') according to any one of claims 1 to 5, wherein the sorting circuit comprises a first support belt (101) and a second support belt (28) installed so as to be able to receive at least one portion of the objects conveyed by the first support belt (101), **characterised in that** said diversion device (13) comprises a blowing member (23) installed in the vicinity of said second support belt (28) and adapted to generate a blast capable of diverting at least one portion of the flow of objects from the second support belt (28) to the diversion hopper (26).

8. A method for diverting (300) a flow of objects in an object sorting assembly (1, 1') according to any one of claims 1 to 7, **characterised in that** it comprises:
- a step (301) of acquiring at least one information data on the operation of said identification and/or characterisation member and/or at least one data for characterising the conveyed flow of objects,
- a step (304) of controlling the flow diversion device depending on (302, 306) said at least one information data and/or on said at least one data for characterising the conveyed flow of objects being received.

9. The method for sorting (400) a waste flow in an object sorting assembly (1, 1') according to any one of claims 1 to 7, **characterised in that** it continuously comprises:
- a step of admitting (401) a waste flow onto the conveying device;
- a step (305) of sorting the waste from the waste flow by the sorting member (1); and
- implementing the diverting method (300) according to claim 8.

10. A sorting method (400) according to claim 9, **characterised in that** it comprises, when at least one portion of the waste flow is diverted:
- a step (402) of recirculating said at least one portion of the waste flow, and advantageously a step (403) of pretreating the recirculated object flow, so as to reintroduce said at least one portion of the waste flow into the waste flow admitted to the admission step (401), and/or
- when a prohibited object is detected in said at least one derived waste flow portion, a step of quarantining said at least one derived waste flow portion.
